# DEMANDE DE BREVET EUROPEEN

(11) **EP 2 993 518 A1**
(43) Date de publication de la demande: **09.03.2016**
(21) Numéro de dépôt: 15179412.0
(22) Date de dépôt: 31.07.2015
(51) Int. Cl.: G03B 21/00, H04N 9/31

(54) **ÊCRAN ET DISPOSITIF D'AFFICHAGE EN RÉTROPROJECTION**

(30) Priorité: 25.08.2014 FR 1457964
(71) Demandeur: COMMISSARIAT A L'ENERGIE ATOMIQUE ET AUX ENERGIES ALTERNATIVES, 75015 Paris (FR)
(72) Inventeur: ROSSINI, Umberto, 38500 COUBLEVIE (FR); MARTINEZ, Christophe, 38100 GRENOBLE (FR)
(74) Mandataire: Thibon, Laurent

(57) **Abrégé**

L'invention concerne undispositif d'affichage en rétroprojection comportant un écran (400) d'affichage comportant au moins un assemblage comportant : un film (403) dont une face tournée vers l'arrière de l'écran comporte des stries définissant des prismes (407) et un élément (409) d'indice de réfraction commandable, revêtant la face striée dudit film (403).

## Description

### Domaine

La présente demande concerne un écran d'affichage en rétroprojection et un dispositif d'affichage en rétroprojection comportant un tel écran. Plus particulièrement, la présente demande concerne un écran et un dispositif d'affichage en rétroprojection susceptibles d'être intégrés dans un habitacle de véhicule.

### Exposé de l'art antérieur

On appelle rétroprojection la projection d'images sur une face d'un écran transmissif, appelée ci-après par convention la face arrière de l'écran, pour la visualisation des images sur la face opposée de l'écran, appelée ci-après par convention la face avant de l'écran. On a déjà proposé d'utiliser des dispositifs d'affichage en rétroprojection pour fournir des informations dans des habitacles de véhicules, par exemple de voitures. De tels dispositifs peuvent par exemple être intégrés au niveau de la console centrale d'une voiture, ou encore au-dessus de cette console centrale. Cependant, des contraintes importantes existent sur des dispositifs d'affichage en rétroprojection intégrés dans des habitacles de véhicules. Ces dispositifs doivent notamment être relativement compacts, être assez directionnels pour éviter des projections lumineuses en direction d'éléments réfléchissants tels que le pare-brise, et assurer la production d'un flux lumineux et d'un contraste en sortie suffisants pour éviter des défauts de lisibilité lorsque le véhicule est placé sous un éclairement de luminosité importante, par exemple en provenance du soleil. En particulier, des problèmes peuvent se poser lorsque l'image projetée sur l'écran doit pouvoir être visualisée sous un angle différent de la normale à l'écran, par exemple lorsque l'écran est situé sur la console centrale d'une voiture et que l'image doit pouvoir être visualisée par le conducteur et/ou par un passager avant voisin du conducteur.

Il serait souhaitable de pouvoir disposer d'un écran d'affichage en rétroprojection et d'un dispositif d'affichage en rétroprojection palliant tout ou partie des inconvénients des écrans et dispositifs d'affichage en rétroprojection connus.

### Résumé

Ainsi, un mode de réalisation prévoit un dispositif d'affichage en rétroprojection, comprenant un écran et une source lumineuse, dans lequel l'écran comporte au moins un assemblage comportant : un film dont une face tournée vers l'arrière de l'écran comporte des stries définissant des prismes ; et un élément d'indice de réfraction commandable, revêtant la face striée dudit film, et dans lequel la source lumineuse est adaptée à projeter une image sur la face arrière de l'écran.

Selon un mode de réalisation, l'élément peut être commandé dans un premier état dans lequel il présente un indice de réfraction égal à mieux que 5 % près à l'indice de réfraction du film, et dans un deuxième état dans lequel il présente un indice de réfraction inférieur de plus de 20 % à l'indice de réfraction du film.

Selon un mode de réalisation, l'élément présente une première face épousant la face striée dudit film, et une deuxième face opposée à la première face, approximativement parallèle au plan moyen de l'écran.

Selon un mode de réalisation, les prismes ont, en section, la forme de triangles isocèles ou de triangles rectangles.

Selon un mode de réalisation, l'écran comporte en outre un diffuseur situé du côté de la face non striée dudit film.

Selon un mode de réalisation, l'écran comporte en outre un polariseur rectiligne et une lame quart d'onde situés du côté de la face non striée dudit film.

Selon un mode de réalisation, l'écran comprend plusieurs assemblages superposés, les prismes des différents assemblages ayant, en section, des formes différentes.

Selon un mode de réalisation, l'élément est un volume hermétiquement clos dans lequel un fluide peut être introduit ou retiré pour modifier l'indice de réfraction du volume.

Selon un mode de réalisation, le fluide présente un indice de réfraction égal à mieux que 5 % près à l'indice de réfraction du film.

Selon un mode de réalisation, le fluide est une huile.

Selon un mode de réalisation, l'écran comporte en outre un dispositif de remplissage et vidage du volume.

Selon un mode de réalisation, l'élément est une couche de cristaux liquides dont l'indice de réfraction peut être modifié par application d'un champ électrique.

Selon un mode de réalisation, l'écran comporte en outre deux électrodes disposées de part et d'autre de ladite couche, et un circuit de commande permettant d'appliquer entre lesdites électrodes une tension de polarisation adaptée à modifier l'indice de réfraction de ladite couche.

Selon un mode de réalisation, le dispositif comporte en outre une lentille de Fresnel entre la source et l'écran.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe schématique d'un exemple d'un dispositif d'affichage en rétroprojection ;
la figure 2 est une vue en coupe schématique d'un exemple d'un écran d'affichage en rétroprojection ;
les figures 3A à 3C représentent schématiquement un autre exemple d'un écran d'affichage en rétroprojection ;
la figure 4 est une vue en coupe partielle et schématique représentant un exemple d'un premier mode de réalisation d'un dispositif d'affichage en rétroprojection ;
la figure 5 est une vue en coupe partielle et schématique représentant une variante de réalisation du dispositif d'affichage en rétroprojection de la figure 4 ;
la figure 6 est une vue de dessus partielle et schématique représentant un exemple de réalisation d'un dispositif d'affichage en rétroprojection du type décrit en relation avec les figures 4 et 5 ;
la figure 7 est une vue en coupe partielle et schématique représentant une variante de réalisation d'un dispositif d'affichage en rétroprojection du type décrit en relation avec les figures 4 à 6 ;
la figure 8 est une vue en coupe partielle et schématique représentant une autre variante de réalisation d'un dispositif d'affichage en rétroprojection du type décrit en relation avec les figures 4 à 7 ;
la figure 9 est une vue en coupe partielle et schématique représentant un exemple d'un deuxième mode de réalisation d'un dispositif d'affichage en rétroprojection ; et
la figure 10 est une vue en coupe partielle et schématique représentant une variante de réalisation du dispositif d'affichage en rétroprojection de la figure 9.

Par souci de clarté, de mêmes éléments ont été désignés par de mêmes références aux différentes figures et, de plus, les diverses figures ne sont pas tracées à l'échelle.

### Description détaillée

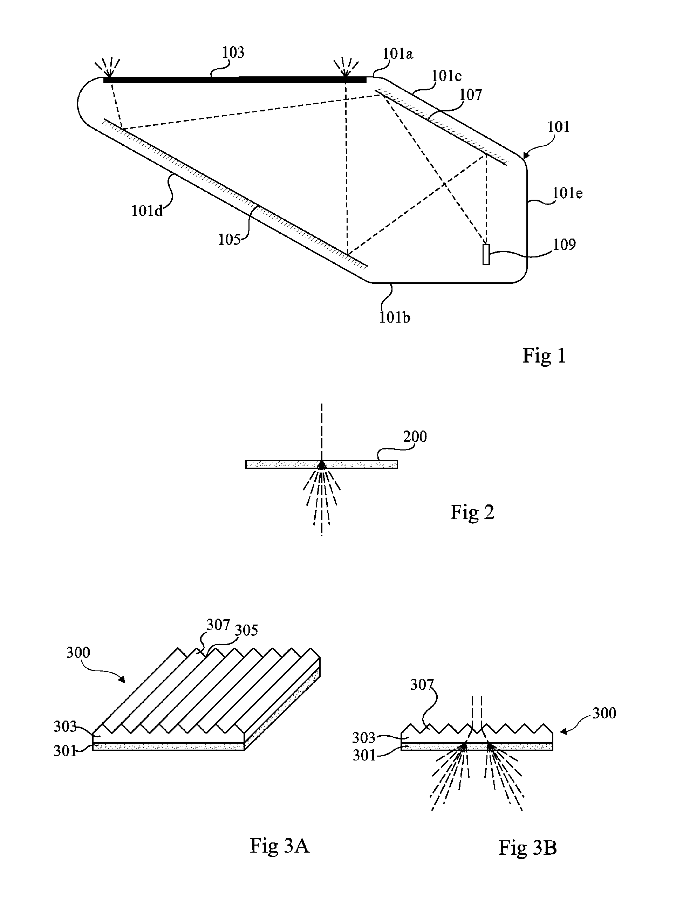

La figure 1 est une vue en coupe schématique d'un exemple d'un dispositif d'affichage en rétroprojection susceptible d'être intégré dans un habitacle de véhicule, par exemple au niveau de la console centrale d'un véhicule automobile.

Le dispositif de la figure 1 comprend un boîtier 101 délimitant une enceinte dans laquelle sont intégrés des éléments de projection du dispositif. Dans cet exemple, le boîtier 101 a la forme générale d'un parallélépipède tronqué selon un plan parallèle à l'une de ses arêtes. Sur la figure 1, cinq parois 101a, 101b, 101c, 101d et 101e du boîtier 101 sont visibles. La paroi 101a correspond à une première face du parallélépipède, la paroi 101b correspond à une deuxième face tronquée du parallélépipède, parallèle à la paroi 101a, la paroi 101c correspond à une troisième face tronquée du parallélépipède, formant un angle obtus avec la paroi 101a, et la paroi 101d correspond à une quatrième face du parallélépipède, parallèle à la paroi 101c, formant un angle aigu avec la paroi 101a. La paroi 101e relie la paroi 101b à la paroi 101c dans le plan de troncature du parallélépipède, et forme, dans cet exemple un angle approximativement droit avec la paroi 101b.

Le boîtier 101 comprend une ouverture de sortie dans la paroi 101a, dans laquelle est positionné un écran 103 d'affichage en rétroprojection. La face arrière de l'écran 103, destinée à recevoir une image projetée par une source lumineuse, est tournée vers l'intérieur du boîtier 101, alors que sa face avant, destinée à être visualisée par un utilisateur, est dirigée vers l'extérieur du boîtier.

A l'intérieur du boîtier, sont disposés deux miroirs plans réfléchissants 105 et 107, positionnés respectivement le long de la paroi 101d et le long de la paroi 101c, et une source lumineuse 109, par exemple une source laser mobile à balayage, un vidéoprojecteur à LED miniaturisé, etc., positionnée approximativement à l'angle entre les parois 101b et 101e. La source 109 est positionnée de façon à éclairer le miroir 107, de sorte que le faisceau réfléchi par le miroir 107 atteigne le miroir 105 et que le faisceau réfléchi par le miroir 105 éclaire la face arrière de l'écran 103.

La figure 2 est une vue en coupe représentant schématiquement un exemple d'un écran 200 d'affichage en rétroprojection. L'écran 200 est essentiellement constitué d'un diffuseur transmissif, c'est-à-dire d'une feuille, plaque ou film transmettant, vers sa face avant, la lumière éclairant sa face arrière, en diffusant plus ou moins fortement cette lumière. Généralement, le cône de sortie du diffuseur est centré sur la direction de propagation de la lumière éclairant sa face arrière, c'est-à-dire que lorsque le diffuseur reçoit, du côté de sa face arrière, un faisceau lumineux sous incidence normale, l'intensité du faisceau émis par le diffuseur du côté de sa face avant est maximale dans un axe normal à l'écran, et décroit au fur et à mesure que l'angle de propagation de la lumière diffusée s'écarte de la normale à l'écran.

Dans un dispositif d'affichage en rétroprojection intégré au niveau de la console centrale d'un habitacle de véhicule, un problème qui se pose est que l'image doit pouvoir être visualisée sous un angle différent de la normale à l'écran, par exemple par le conducteur ou à la fois par le conducteur et un passager avant. Lorsqu'un écran du type décrit en relation avec la figure 2 est utilisé, il convient, pour que l'image perçue par le conducteur et/ou le passager avant soit suffisamment lumineuse, de prévoir une source lumineuse relativement puissante, et un écran diffuseur dont le cône de sortie présente une ouverture angulaire (ou angle de diffusion) relativement large, par exemple supérieure ou égale à 80° dans le plan horizontal (à titre d'exemple, l'angle entre le conducteur et le passager avant est d'environ 60° dans le plan horizontal, et le conducteur et le passager avant doivent chacun voir un cône d'environ 20° d'ouverture angulaire dans le plan horizontal). Ceci entraîne une consommation électrique importante. De plus, des réflexions parasites susceptibles de gêner le conducteur peuvent se produire. En effet, lorsqu'on cherche à réaliser un diffuseur présentant un cône de sortie d'ouverture angulaire large (par exemple supérieure ou égale à 80°), les bords du cône d'émission du diffuseur ne sont généralement pas francs. Il en résulte qu'une partie non négligeable de la lumière est déviée en dehors du cône de sortie visé, c'est-à-dire vers les vitres latérales du véhicule.

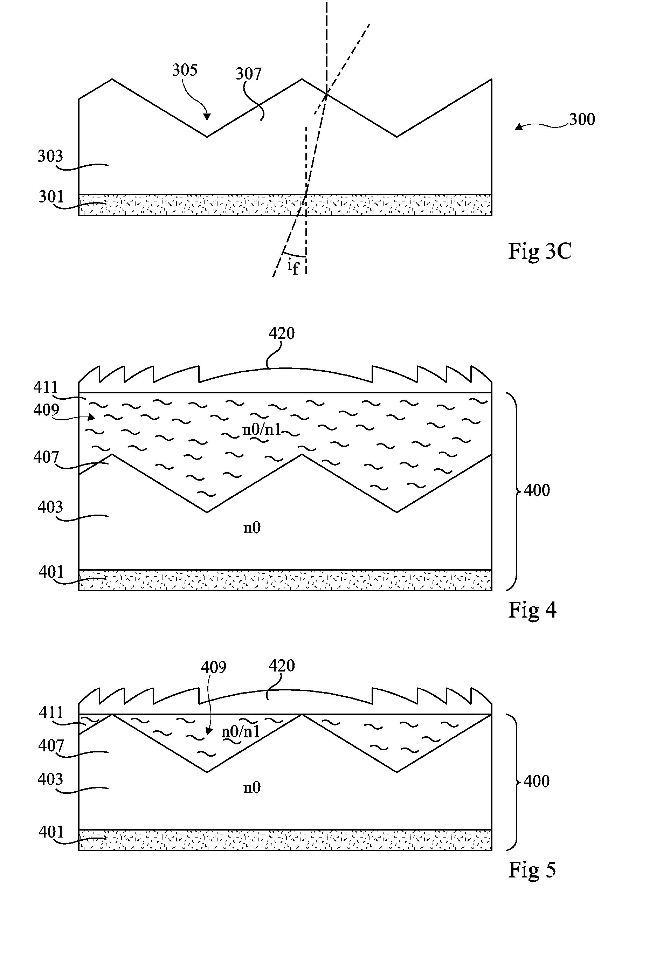

Les figures 3A à 3C représentent schématiquement un autre exemple d'un écran d'affichage en rétroprojection 300. La figure 3A est une vue en perspective de l'écran 300, la figure 3B est une vue en coupe de l'écran 300, et la figure 3C est une vue en coupe partielle agrandie de l'écran 300. L'écran 300 comprend un diffuseur transmissif 301 du type décrit en relation avec la figure 2. L'écran 300 comprend en outre, accolée à la face arrière du diffuseur 301, un film transparent 303 dont la face opposée au diffuseur 301 (c'est-à-dire la face tournée vers la source lumineuse ou face arrière) comporte des stries 305 à section triangulaire définissant des prismes 307. Dans l'exemple représenté, les stries 305 sont parallèles et s'étendent sur toute la largeur de l'écran 300, à pas constant. Dans cet exemple, les prismes 307 définis entre les parois latérales des stries 305 sont tous sensiblement identiques et ont, en section, la forme de triangles isocèles. Dans cet exemple, les bases des prismes 307 (bases des triangles isocèles) définissent une surface plane continue, parallèle au diffuseur 301 et de dimensions sensiblement identiques à celles du diffuseur 301.

Lorsqu'une image est projetée sur la face arrière de l'écran 300, si le pas des prismes est suffisamment petit par rapport à la résolution de l'image, pour chacun des pixels de l'image, une partie de la lumière correspondant au pixel est déviée d'un angle i_{f} vers la gauche (dans l'orientation des figures 3B et 3C), et la partie restante est déviée d'un angle i_{f} vers la droite (dans l'orientation des figures 3B et 3C). En sortie du diffuseur 301, la lumière correspondant à un pixel donné de l'image est donc répartie dans deux cônes de diffusion centrés sur des axes distincts non orthogonaux à l'écran.

L'utilisation d'un écran à prismes du type décrit en relation avec les figures 3A à 3C dans un dispositif d'affichage en rétroprojection intégré au niveau de la console centrale d'un habitacle de véhicule, permet de rendre l'image projetée sur l'écran visible aussi bien par le conducteur que par le passager, avec un rendement entre la puissance émise par la source lumineuse et la luminosité perçue par l'utilisateur amélioré par rapport aux dispositifs utilisant un écran du type décrit en relation avec la figure 2. Un avantage est que la puissance lumineuse totale émise en sortie du diffuseur peut être diminuée. En outre, l'angle de diffusion du diffuseur 301 peut être réduit par rapport à un écran du type décrit en relation avec la figure 2. A titre d'exemple, l'angle de diffusion du diffuseur 301 peut être choisi inférieur ou égal à 30°, voire 20°, dans le plan horizontal. Ceci permet de limiter les risques de réflexions parasites susceptibles de gêner le conducteur. On notera en particulier que le fait de dévier la lumière dans les directions recherchées avant de la diffuser avec un diffuseur à faible angle d'ouverture, permet d'obtenir une coupure franche des bords du cône de diffusion, limitant ainsi les risques de réflexions parasites notamment sur les vitres latérales du véhicule.

Dans un dispositif d'affichage en rétroprojection utilisant un tel écran, un système optique (non visible sur les figures 3A à 3C) permettant de contrôler l'angle d'incidence de la lumière projetée sur l'écran, par exemple une lentille de Fresnel, peut être prévue entre les éléments de projection et la face arrière de l'écran.

Un inconvénient d'un dispositif d'affichage en rétroprojection utilisant un écran du type décrit en relation avec les figures 3A à 3C est qu'il ne permet pas une visualisation des images projetées sous un angle normal à l'écran. En particulier, lorsqu'un tel dispositif est intégré au niveau de la console centrale d'un habitacle de véhicule, les images projetées ne sont pas visibles par un passager arrière situé au centre du véhicule.

Il serait souhaitable de pouvoir disposer d'un dispositif d'affichage en rétroprojection adapté à être commandé pour sélectionner un ou plusieurs angles privilégiés de projection des images parmi un ensemble d'au moins deux configurations (par exemple une première configuration dans laquelle les images projetées sont visibles uniquement par les passagers avant latéraux, et une deuxième configuration dans laquelle les images projetées sont visibles uniquement par un ou plusieurs passagers arrière situés approximativement au centre du véhicule). Ceci permettrait par exemple de pouvoir adapter le mode de projection en fonction du nombre d'occupants et de leurs positions dans le véhicule.

La figure 4 est une vue en coupe partielle et schématique représentant un exemple d'un mode de réalisation d'un dispositif d'affichage en rétroprojection. En particulier, la figure 4 comprend une vue en coupe partielle et schématique d'un exemple d'un mode de réalisation d'un écran 400 d'affichage en rétroprojection.

L'écran 400 du dispositif d'affichage de la figure 4 comprend un diffuseur transmissif 401. A titre d'exemple, le diffuseur 401 peut être un diffuseur lenticulaire cylindrique du type décrit dans l'article "A dual-directional light-control film with a high-sag and high-asymmetrical-shape microlens array fabricated by a UV imprinting process" de Ta-Wei Lin et al. La prévision d'un tel diffuseur a pour avantage de réduire les phénomènes de tavelure ("speckle" en anglais) lorsque la source lumineuse du dispositif d'affichage est une source à forte cohérence lumineuse, par exemple une source laser. D'autres types de diffuseurs peuvent toutefois être utilisés, par exemple un diffuseur du type commercialisé par la société LUMINIT sous la dénomination "Light Shaping Diffuser". Le diffuseur 401 présente de préférence un angle de diffusion relativement faible, par exemple inférieur ou égal à 30° et de préférence inférieur ou égal à 20° dans le plan horizontal. A titre d'exemple illustratif et non limitatif, l'angle de diffusion du diffuseur 401 dans le plan vertical peut être de l'ordre de 20 à 30°.

L'écran 400 comprend en outre, revêtant la face arrière du diffuseur 401, un film 403 en un matériau transparent, dont la face opposée au diffuseur 401 (ou face arrière) comporte des stries à section triangulaire définissant des prismes 407. Dans l'exemple représenté, les stries sont parallèles et s'étendent sur toute la largeur de l'écran 400, à pas constant. Dans cet exemple, les prismes 407 définis entre les parois latérales des stries sont tous sensiblement identiques et ont, en section, la forme de triangles isocèles. Dans cet exemple, les bases des prismes 407 définissent une surface plane continue, parallèle au diffuseur 401 et de dimensions sensiblement identiques à celles du diffuseur 401. A titre d'exemple, le pas entre des prismes voisins, correspondant dans cet exemple à la largeur de la base des prismes, peut être compris entre 20 et 200 micromètres. Le film 403 est par exemple un film en ou à base de polytéréphtalate d'éthylène (PET), embossé du côté de sa face arrière suivant un motif correspondant à la forme des prismes 407. D'autres matériaux et/ou méthodes de réalisation peuvent toutefois être prévus pour former les prismes 407. A titre d'exemple, les prismes 407 peuvent être réalisés par gravure. Une mince couche de colle, non représentée, peut être prévue entre la face arrière du diffuseur 401 et la face avant du film 403.

L'écran 400 comprend en outre, revêtant la face arrière du film 403, un élément transparent 409 d'indice de réfraction commandable. Dans cet exemple, du côté de sa face avant, l'élément 409 épouse la surface en triangles du film 403, et, du côté de sa face arrière, l'élément 409 est approximativement plan et parallèle au diffuseur 401. Dans l'exemple de la figure 4, la plus grande épaisseur de l'élément 409 est supérieure à la hauteur des prismes 407, c'est-à-dire que la face arrière de l'élément 409 se trouve à l'arrière de l'écran par rapport au plan contenant les arêtes sommitales des prismes 407.

Selon un aspect du mode de réalisation de la figure 4, l'élément 409 est un volume hermétiquement clos dans lequel un fluide transparent 411 peut être introduit ou retiré pour modifier l'indice de réfraction du volume. Dans cet exemple, le fluide 411 présente un indice de réfraction n0 sensiblement égal à l'indice de réfraction du film 403, par exemple égal à 5 % près et de préférence à 1 % près à l'indice de réfraction du film 403. L'indice de réfraction n0 du fluide 411 est par exemple compris entre 1,5 et 1,65. Le fluide 411 est par exemple un liquide, par exemple une huile. En l'absence du fluide 411, le volume 409 est par exemple rempli d'air, et présente un indice de réfraction n1 inférieur à l'indice de réfraction du film 403, par exemple inférieur de plus de 20 % à l'indice de réfraction du film 403.

Dans l'exemple de la figure 4, le dispositif d'affichage comprend en outre un système optique 420 adapté à contrôler l'angle d'incidence, sur l'écran 400, des rayons lumineux projetés par la source (non représentée). Dans cet exemple, le système optique 420 est tel que tous les rayons lumineux projetés par la source arrivent sur la face arrière de l'écran sous une incidence approximativement normale (orthogonalement au diffuseur 401). Dans cet exemple, le système optique 420 comprend une lentille de Fresnel disposée contre la face arrière de l'élément 409. Plus particulièrement, dans l'exemple représenté, la face avant de la lentille de Fresnel 420 et la face arrière du film 403 forment les parois principales d'une enceinte hermétique délimitant le volume 409. Des joints périphériques, non représentés, peuvent être prévus pour fermer latéralement l'enceinte délimitant le volume 409. Des espaceurs, non représentés, peuvent de plus être prévus pour maintenir une distance non nulle entre la face avant de la lentille de Fresnel 420 et les arêtes sommitales des prismes 407. En pratique, pour faciliter l'assemblage, une lame transparente non représentée, par exemple en verre, peut faire interface entre l'élément optique 420 et le volume 409, la face avant de cette lame constituant alors la paroi arrière de l'enceinte délimitant le volume 409. De plus, à titre de variante, une couche d'interface (non représentée) de faible mouillabilité, par exemple en polytétrafluoroéthylène (PTFE) ou en polydiméthylsiloxane (PDMS), peut revêtir les parois internes de l'enceinte délimitant le volume 409, de façon à faciliter le retrait du fluide 411 sans laisser de gouttelettes. Cette couche d'interface peut en outre présenter des propriétés antireflets, de façon à permettre d'éviter certaines réflexions parasites lorsque le fluide 411 est absent. L'épaisseur de cette couche d'interface est de préférence relativement mince, par exemple d'épaisseur inférieure à 10 µm et de préférence inférieure à 1 µm, pour ne pas avoir d'influence significative sur la lumière projetée par la source.

Le dispositif d'affichage de la figure 4 comporte en outre un mécanisme (non visible sur la figure 4) pouvant être commandé pour remplir le volume 409 par le fluide 411, ou pour vider le volume 409.

Lorsque le volume 409 est rempli par le fluide 411, l'indice de réfraction du volume 409 est sensiblement égal à l'indice de réfraction n0 du film 403. Le dioptre formé à l'interface entre l'élément 409 et le film 403 est alors inactif, et les prismes 407 ne dévient pas la lumière projetée par la source lumineuse du dispositif. Les images projetées ne sont alors visibles que si l'observateur est placé en face de l'écran, dans le cône de diffusion du diffuseur 401. A titre d'exemple, dans le cas d'un dispositif d'affichage en rétroprojection intégré au niveau de la console centrale d'un habitacle de véhicule, les images projetées ne sont visibles que par un ou plusieurs occupants du véhicule situés sensiblement au centre du véhicule (par exemple des passagers arrière), et ne sont pas ou peu visibles par des occupants situés de part et d'autre de la console (par exemple le conducteur et le passager avant).

Lorsque le fluide 411 n'est pas présent dans le volume 409, l'indice de réfraction n1 du volume 409 est distinct de l'indice de réfraction n0 du film 403. Le dioptre formé à l'interface entre l'élément 409 et le film 403 est alors actif, et les prismes 407 dévient latéralement (à gauche et à droite dans l'orientation de la figure) la lumière projetée par la source lumineuse du dispositif, d'un angle qui dépend de l'inclinaison des faces latérales des prismes, et des indices n0 et n1. Dans le cas d'un dispositif destiné à être intégré au niveau de la console centrale d'un véhicule automobile, on prévoit par exemple d'utiliser un film 403 et un élément 409 d'indices respectifs n0 et n1 permettant d'obtenir un angle i_{f} adapté à la visualisation de l'image à la fois par le conducteur et par le passager avant, par exemple un angle compris entre 10 et 30 degrés. Les images projetées ne sont alors visibles que par le conducteur et le passager avant, et ne sont pas ou peu visibles par des passagers situés au centre du véhicule.

La figure 5 est une vue en coupe partielle et schématique représentant une variante de réalisation du dispositif d'affichage en rétroprojection de la figure 4, et, plus particulièrement de l'écran 400 de la figure 4.

L'écran 400 de la figure 5 diffère de l'écran 400 de la figure 4 en ce que, dans l'exemple de la figure 5, la plus grande épaisseur de l'élément 409 est égale à la hauteur des prismes 407, c'est-à-dire que la face arrière de l'élément 409 coïncide avec le plan contenant les arêtes sommitales des prismes 407.

Le fonctionnement de l'écran et du dispositif d'affichage de la figure 5 est identique ou similaire à ce qui a été décrit en relation avec la figure 4.

Un avantage de l'exemple de la figure 5 est que les sommets des prismes 407 servent de point d'appui à l'élément formant la paroi arrière de l'enceinte délimitant le volume 409 (la face avant de la lentille de Fresnel 420 dans l'exemple représenté). Ceci permet de se passer d'espaceurs entre le film 403 et le système optique 420, facilitant ainsi la réalisation du dispositif.

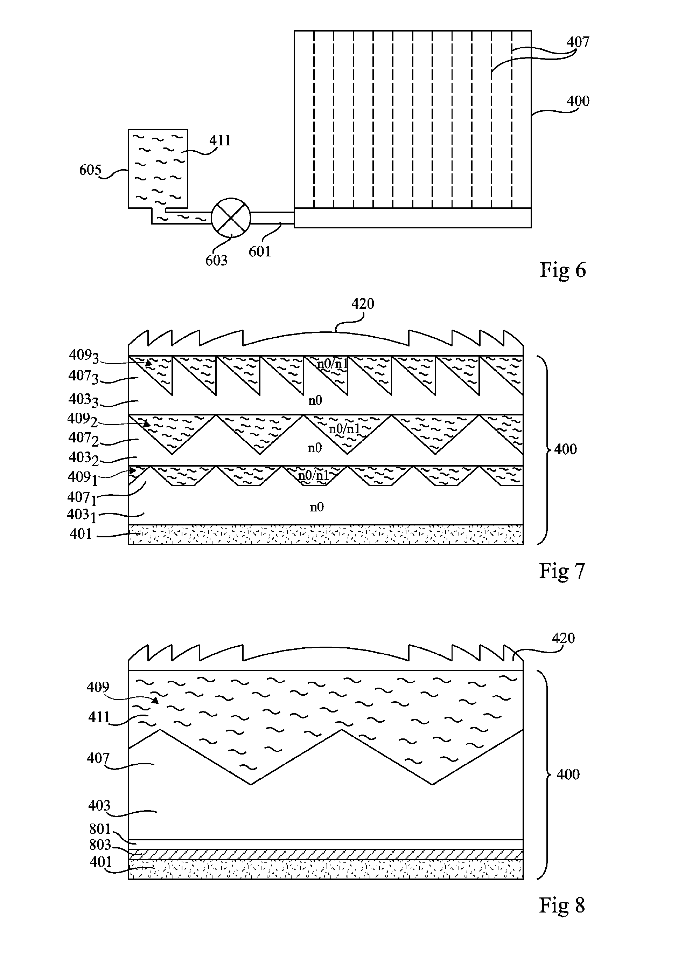

La figure 6 est une représentation partielle et schématique d'un exemple de réalisation d'un dispositif d'affichage en rétroprojection du type décrit en relation avec les figures 4 et 5. Plus particulièrement, la figure 6 représente schématiquement l'écran 400, vu de face, et un exemple d'un mécanisme pouvant être commandé pour remplir le volume 409 par le fluide 411, ou pour retirer le fluide 411 du volume 409.

Sur la figure 6, l'écran 400 a été représenté très schématiquement par un rectangle. Les différents éléments composant l'écran, et en particulier l'élément 409, n'ont pas été représentés. Seules les arêtes des prismes 407 de l'écran ont été représentées schématiquement par des traits interrompus.

Dans l'exemple de la figure 6, le mécanisme de commande de l'indice de réfraction de l'élément 409 comprend une pompe 603 couplant un réservoir 605 adapté à contenir le fluide 411, à un élément 601 d'injection/extraction du fluide 411 dans le volume 409. Dans l'exemple représenté, l'élément 601 est un conduit d'injection/extraction permettant de remplir/vider en parallèle les différentes stries formées dans le film 403.

Compte tenu de l'épaisseur relativement faible du volume 409, la pompe 603 peut avantageusement être une pompe de faible encombrement, par exemple une pompe à piston et diaphragme du type généralement utilisé dans les fers à repasser, appareils de cuisson vapeur, doseurs de savons, etc. A titre d'exemple, pour une utilisation dans une console de véhicule automobile, un temps de commutation satisfaisant (typiquement inférieur à 10 secondes) peut être obtenu avec une pompe présentant un débit compris entre 5 à 50 ml/mn, pour un dispositif dans lequel la longueur des stries est de l'ordre de 10 cm, la section circulaire équivalente des stries présente un diamètre de l'ordre de 28 µm, et la viscosité du fluide est similaire ou identique à la viscosité de l'eau, c'est-à-dire de l'ordre de 10⁻³ Pa.s.

La figure 7 est une vue en coupe partielle et schématique représentant une variante de réalisation d'un dispositif d'affichage en rétroprojection du type décrit en relation avec les figures 4 à 6, et, plus particulièrement de l'écran 400 de ce dispositif.

Dans les exemples des figures 4 à 6, l'écran 400 comprend un assemblage d'un film strié 403 et d'un élément 409 d'indice de réfraction commandable permettant d'activer ou non la fonction optique du film 403. L'écran 400 de la figure 7 diffère des écrans des figures 4 à 6 en ce qu'il comprend non pas un seul mais trois assemblages superposés, adaptés à mettre en oeuvre trois fonctions différentes de répartition de la lumière projetée. Chaque assemblage comprend un film 403ᵢ du type décrit en relation avec les figures 4 à 6, présentant des stries du côté de sa face arrière, et un élément 409ᵢ d'indice de réfraction commandable du type décrit en relation avec les figures 4 à 6, revêtant la face arrière du film 403ᵢ et permettant d'activer/désactiver la fonction optique du film 403ᵢ (avec i entier allant de 1 à 3).

Le film 403₁ présente une face avant approximativement plane, accolée à la face arrière du diffuseur 401, et une face arrière striée. Dans cet exemple, les stries formées du côté de la face arrière du film 403₁ ont, en section, une forme en trapèze, par exemple en trapèze isocèle. Ainsi, la face arrière du film 403₁ comprend des prismes 407₁, et des zones approximativement planes et parallèles à la face avant du film, séparant deux à deux les prismes 407₁. A l'état actif (c'est-à-dire en l'absence du fluide 411 dans le volume 409₁), le film 403₁ permet de dévier vers la gauche (dans l'orientation de la figure) une première partie de la lumière projetée, de dévier vers la droite (dans l'orientation de la figure) une deuxième partie de la lumière projetée, et de transmettre sans déviation le reste de la lumière projetée. Dans le cas d'un dispositif intégré au niveau de la console centrale d'un habitacle de véhicule, le film 403₁ permet par exemple de rendre les images projetées visibles à la fois par le conducteur et le passager avant, et par un ou plusieurs passagers arrière situés sensiblement au centre du véhicule.

Le film 403₂ présente une face avant approximativement plane, formant dans cet exemple la paroi arrière de l'enceinte délimitant le volume 409₁, et une face arrière striée. Dans cet exemple, les stries du film 403₂ sont des stries à section triangulaire, identiques ou similaires aux stries du film 403 décrit en relation avec les figures 4 et 5, définissant des prismes 407₂ identiques ou similaires aux prismes 407 des exemples des figures 4 et 5. A l'état actif (en l'absence du fluide 411 dans le volume 409₂), le film 403₂ permet de dévier vers la gauche (dans l'orientation de la figure) une partie de la lumière projetée, et de dévier vers la droite (dans l'orientation de la figure) le reste de la lumière projetée. Dans le cas d'un dispositif intégré au niveau de la console centrale d'un habitacle de véhicule, le film 403₂ permet par exemple de rendre les images projetées visibles par le conducteur et le passager avant, et invisibles par les passagers arrière.

Le film 403₃ présente une face avant approximativement plane, formant dans cet exemple la paroi arrière de l'enceinte délimitant le volume 409₂, et une face arrière striée. Dans cet exemple, les stries du film 403₃ sont des stries à section en triangle rectangle, définissant des prismes triangulaires 407₃ du type décrit en relation avec les figures 4 et 5, mais présentant une seule face latérale inclinée, l'autre face latérale du prisme étant approximativement orthogonale à sa base. A l'état actif (en l'absence du fluide 411 dans le volume 409₃), le film 403₃ permet de dévier vers la gauche (dans l'orientation de la figure) la totalité de la lumière projetée. Dans le cas d'un dispositif intégré au niveau de la console centrale d'un habitacle de véhicule, le film 403₃ permet par exemple de rendre les images projetées visibles uniquement par le conducteur.

Dans l'exemple de la figure 7, la paroi arrière de l'enceinte délimitant le volume 409₃ correspond à la face avant du système optique 420.

Le dispositif d'affichage de la figure 7 peut comporter trois mécanismes de commande distincts du type décrit en relation avec la figure 6, couplés respectivement aux éléments 409₁, 409₂ et 409₃. A titre de variante, un mécanisme de commande commun aux trois assemblages, comportant une seule pompe, peut être prévu pour commander le remplissage et le vidage des éléments 409₁, 409₂ et 409₃.

Un avantage de l'écran 400 de la figure 7 est qu'il offre un nombre de configurations de projection plus élevé qu'un écran du type décrit en relation avec les figures 4 à 6. En fonction de l'application envisagée, on pourra choisir un nombre d'assemblages film 403i/élément 409ᵢ empilés différent de trois.

La figure 8 est une vue en coupe partielle et schématique représentant une autre variante de réalisation d'un dispositif d'affichage en rétroprojection du type décrit en relation avec les figures 4 à 7, et, plus particulièrement, de l'écran 400 d'un tel dispositif.

Dans l'exemple de la figure 8, l'écran 400 comprend les mêmes éléments que l'écran 400 de la figure 4, mais diffère de l'écran de la figure 4 en ce qu'il comprend en outre, entre la face avant du film 403 et la face arrière du diffuseur 401, une lame quart d'onde 801 et un polariseur 803. La lame quart d'onde 801 est accolée à la face avant du film 403, et le polariseur 803 est disposé entre la lame quart d'onde 801 et le diffuseur 401. La lame quart d'onde 801 est de préférence orientée de façon que ses axes neutres forment un angle d'approximativement 45 degrés, par exemple un angle compris entre 40 et 50 degrés, avec la direction de polarisation du polariseur 803. La prévision de l'empilement formé par la lame quart d'onde 801 et le polariseur 803 permet d'améliorer le contraste du dispositif d'affichage. En effet, l'empilement formé par la lame quart d'onde 801 et le polariseur 803 filtre sensiblement la moitié de la lumière qui le traverse (dans un sens ou dans l'autre). Toutefois, la lumière projetée par la source lumineuse traverse une seule fois l'empilement 801-803, alors que la lumière parasite rétrodiffusée - c'est-à-dire la lumière provenant de l'extérieur du dispositif, par exemple du soleil, qui traverse l'écran de sa face avant vers sa face arrière, se réfléchit à l'intérieur du dispositif, puis retraverse l'écran de sa face arrière vers sa face avant - est filtrée deux fois par l'empilement 801-803. La lumière rétrodiffusée est donc atténuée plus fortement que la lumière utile, projetée par la source lumineuse, ce qui améliore le contraste. On notera que la variante de réalisation de la figure 8 peut être combinée avec les variantes des figures 5 et 7.

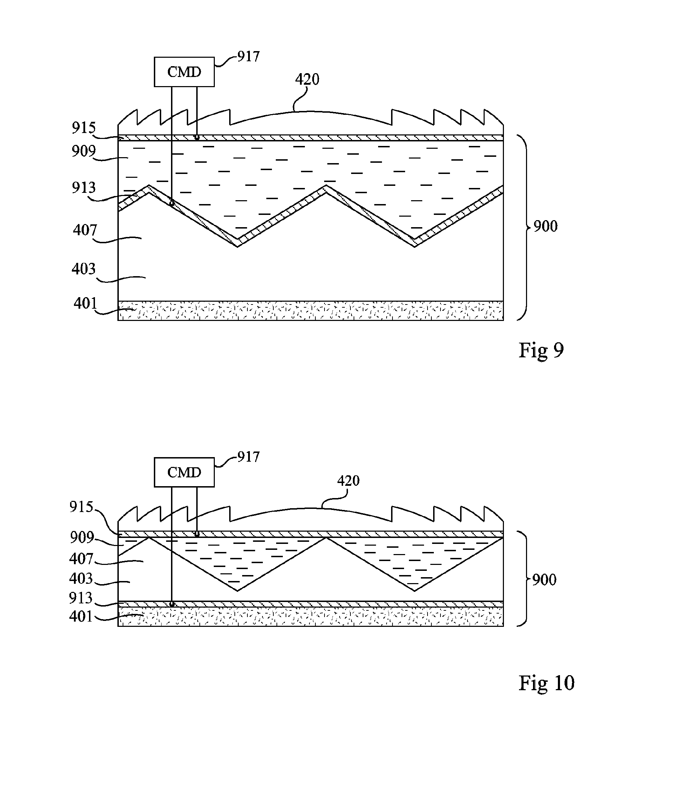

La figure 9 est une vue en coupe partielle et schématique représentant un exemple d'un autre mode de réalisation d'un dispositif d'affichage en rétroprojection. En particulier, la figure 9 comprend une vue en coupe partielle et schématique d'un exemple d'un mode de réalisation d'un écran 900 d'affichage en rétroprojection.

L'écran 900 du dispositif d'affichage de la figure 9 comprend un diffuseur transmissif 401, par exemple identique ou similaire à celui de l'écran 400 de la figure 4. L'écran 900 comprend en outre, revêtant la face arrière du diffuseur 401, un film 403 en un matériau transparent, dont la face opposée au diffuseur 401 (ou face arrière) comporte des stries à section triangulaire définissant des prismes 407. Le film 403 de l'écran 900 est par exemple identique ou similaire au film 403 de l'écran 400 de la figure 4.

L'écran 900 comprend en outre, revêtant la face arrière du film 403, un élément transparent 909 d'indice de réfraction commandable. Dans cet exemple, du côté de sa face avant, l'élément 909 épouse la surface en triangles du film 403, et, du côté de sa face arrière, l'élément 909 est approximativement plan et parallèle au diffuseur 401. Dans l'exemple de la figure 9, la plus grande épaisseur de l'élément 909 est supérieure à la hauteur des prismes 407, c'est-à-dire que la face arrière de l'élément 909 se trouve à l'arrière de l'écran par rapport au plan contenant les arêtes sommitales des prismes 407.

Selon un aspect du mode de réalisation de la figure 9, l'élément 909 est une couche de cristaux liquides dont l'indice de réfraction peut être commandé, par l'intermédiaire de deux électrodes transparentes 913 et 915, pour prendre l'une ou l'autre de deux valeurs n0 et n1. Plus particulièrement, dans cet exemple, la valeur n0 est approximativement égale à l'indice de réfraction du film 403, par exemple égale à 5 % près et de préférence à 1 % près à l'indice de réfraction du film 403, et la valeur n1 est inférieure à l'indice de réfraction du film 403, par exemple inférieure de plus de 20 % à l'indice de réfraction du film 403. Les valeurs n0 et n1 correspondent par exemple respectivement à l'indice ordinaire et à l'indice extraordinaire du cristal liquide.

Dans l'exemple de la figure 9, le dispositif d'affichage comprend en outre un système optique 420 adapté à contrôler l'angle d'incidence, sur l'écran 900, des rayons lumineux projetés par la source (non représentée). Le système optique 420 du dispositif de la figure 9 est par exemple identique ou similaire au système optique 420 du dispositif de la figure 4.

Dans l'exemple de la figure 9, l'électrode 913 est disposée entre la face arrière du film 403 et la face avant de la couche 909, suivant le contour structuré de la face arrière du film 403, et l'électrode 915 est disposée entre la face arrière de la couche 909 et la face avant du système optique 420, et est approximativement plane et parallèle au diffuseur 401.

Le dispositif d'affichage de la figure 9 comporte en outre un circuit de commande 917 (CMD), permettant d'appliquer entre les électrodes 913 et 915 une tension adaptée à commander l'état des cristaux de la couche 909 de façon à modifier l'indice de réfraction de la couche 909. Plus particulièrement, dans cet exemple, le circuit de commande 917 est adapté à appliquer entre les électrodes 913 et 915 deux niveaux de tension distincts, correspondant respectivement à la commande à l'état d'indice n0 de la couche 909 et à la commande à l'état d'indice n1 de la couche 909.

Lorsque l'élément 909 est à l'état d'indice n0, le dioptre formé à l'interface entre l'élément 909 et le film 403 est inactif, et les prismes 407 ne dévient pas la lumière projetée par la source lumineuse du dispositif. Lorsque l'élément 909 est à l'état d'indice n1, le dioptre formé à l'interface entre l'élément 909 et le film 403 est actif, et les prismes 407 dévient latéralement (à gauche et à droite dans l'orientation de la figure) la lumière projetée par la source lumineuse du dispositif, d'un angle qui dépend de l'inclinaison des faces latérales des prismes, et des indices n0 et n1.

On notera que la source lumineuse (non visible sur la figure 9) du dispositif d'affichage en rétroprojection peut être polarisée. Dans ce cas, les cristaux liquides de la couche 909 sont de préférence alignés de façon que la modification d'indice de réfraction de la couche 909 (lorsqu'une tension de commande appropriée est appliquée entre les électrodes 913 et 915), affecte la lumière émise par la source. L'alignement peut être obtenu par frottement d'un agent d'alignement à base de polyimide, ou à l'aide d'un agent d'alignement à base de polyimide s'alignant par insolation.

La figure 10 est une vue en coupe partielle et schématique représentant une variante de réalisation du dispositif d'affichage en rétroprojection de la figure 9, et, plus particulièrement de l'écran 900 de la figure 9.

L'écran 900 de la figure 10 diffère de l'écran 900 de la figure 9 en ce que, dans l'exemple de la figure 10, la plus grande épaisseur de l'élément 909 est égale à la hauteur des prismes 407, c'est-à-dire que la face arrière de l'élément 909 coïncide approximativement avec le plan contenant les arêtes sommitales des prismes 407. De plus, l'écran 900 de la figure 10 diffère de l'écran 900 de la figure 9 en ce que, dans l'exemple de la figure 10, l'électrode 913 est approximativement plane et est disposée entre la face arrière du diffuseur 401 et la face avant du film 403. Dans cet exemple, l'électrode 913 n'est donc pas en contact avec la couche 909.

Le fonctionnement de l'écran et du dispositif d'affichage de la figure 10 est identique ou similaire à ce qui a été décrit en relation avec la figure 9.

L'écran 900 de la figure 10 présente l'avantage d'être particulièrement aisé à fabriquer.

Des modes de réalisation particuliers ont été décrits. Diverses variantes et modifications apparaîtront à l'homme de l'art.

En particulier, les modes de réalisation décrits ci-dessus sont compatibles non seulement avec des écrans plans, mais aussi avec des écrans de formes courbes.

De plus, en partant des modes de réalisation décrits ci-dessus, l'homme de l'art pourra, sans faire preuve d'activité inventive, ajouter à l'empilement de l'écran, des couches, feuilles, films ou plaques supplémentaires, pour mettre en oeuvre d'autres fonctions, par exemple une ou plusieurs couches antireflets.

En outre, on a décrit ci-dessus des modes de réalisation d'écrans comportant plusieurs éléments empilés. Les modes de réalisation décrits ne se limitent pas aux exemples susmentionnés de réalisation des divers éléments d'écran. On comprendra que chaque élément d'écran, et notamment le film 403, pourra être réalisé sous forme de feuille, de couche, de film, de plaque, etc.

De plus, divers modes de réalisation avec diverses variantes ont été décrits ci-dessus. On notera que l'homme de l'art pourra combiner divers éléments de ces divers modes de réalisation et variantes sans faire preuve d'activité inventive.

En particulier, les variantes de réalisation décrites en relation avec les figures 7 et 8 peuvent aisément être adaptées au mode de réalisation décrit en relation avec les figures 9 et 10.

## Revendications

1. Dispositif d'affichage en rétroprojection, comprenant un écran (400 ; 900) et une source lumineuse, dans lequel l'écran (400 ; 900) comporte au moins un assemblage comportant :
un film (403) dont une face tournée vers l'arrière de l'écran comporte des stries définissant des prismes (407) ; et
un élément (409 ; 909) d'indice de réfraction commandable, revêtant la face striée dudit film (403),
et dans lequel la source lumineuse est adaptée à projeter une image sur la face arrière de l'écran.

2. Dispositif selon la revendication 1, dans lequel ledit élément (409 ; 909) peut être commandé dans un premier état dans lequel il présente un indice de réfraction (n0) égal à mieux que 5 % près à l'indice de réfraction dudit film (403), et dans un deuxième état dans lequel il présente un indice de réfraction inférieur de plus de 20 % à l'indice de réfraction dudit film (403).

3. Dispositif selon la revendication 1 ou 2, dans lequel ledit élément (409 ; 909) présente une première face épousant la face striée dudit film (403), et une deuxième face opposée à la première face, approximativement parallèle au plan moyen de l'écran.

4. Dispositif selon l'une quelconque des revendications 1 à 3, dans lequel les prismes (407) ont, en section, la forme de triangles isocèles ou de triangles rectangles.

5. Dispositif selon l'une quelconque des revendications 1 à 4, dans lequel l'écran (400 ; 900) comporte en outre un diffuseur (401) situé du côté de la face non striée dudit film (403).

6. Dispositif selon l'une quelconque des revendications 1 à 5, dans lequel l'écran (400 ; 900) comprend en outre un polariseur (803) rectiligne et une lame quart d'onde (801) situés du côté de la face non striée dudit film (403).

7. Dispositif selon l'une quelconque des revendications 1 à 6, dans lequel l'écran (400 ; 900) comprend plusieurs assemblages superposés, les prismes (407i) des différents assemblages ayant, en section, des formes différentes.

8. Dispositif selon l'une quelconque des revendications 1 à 7, dans lequel ledit élément (409) est un volume hermétiquement clos dans lequel un fluide (411) peut être introduit ou retiré pour modifier l'indice de réfraction du volume.

9. Dispositif selon la revendication 8, dans lequel le fluide (411) présente un indice de réfraction (n0) égal à mieux que 5 % près à l'indice de réfraction dudit film (403).

10. Dispositif selon la revendication 8 ou 9, dans lequel le fluide (411) est une huile.

11. Dispositif selon l'une quelconque des revendications 8 à 10, dans lequel l'écran (400) comporte en outre un dispositif (601, 603, 605) de remplissage et vidage dudit volume (409).

12. Dispositif selon l'une quelconque des revendications 1 à 7, dans lequel ledit élément (909) est une couche de cristaux liquides dont l'indice de réfraction peut être modifié par application d'un champ électrique.

13. Dispositif selon la revendication 12, dans lequel l'écran (900) comporte en outre deux électrodes (913, 915) disposées de part et d'autre de ladite couche (909), et un circuit de commande (917) permettant d'appliquer entre lesdites électrodes une tension de polarisation adaptée à modifier l'indice de réfraction de ladite couche (909).

14. Dispositif selon l'une quelconque des revendications 1 à 13, comportant en outre une lentille de Fresnel (420) entre la source lumineuse et l'écran (400 ; 900).
